# EUROPEAN PATENT SPECIFICATION

(11) **EP 1 878 122 B1**
(45) Date of publication and mention of the grant of the patent: **04.07.2018**
(21) Application number: 06758232.0
(22) Date of filing: 29.03.2006
(51) Int. Cl.: H04B 1/18

(54) **SYSTEM AND METHOD FOR RECEIVING MULTIPLE CHANNELS**
SYSTEM UND VERFAHREN ZUM EMPFANGEN MEHRERER KANÄLE
SYSTEME ET PROCEDE DE RECEPTION DE PLUSIEURS CANAUX

(30) Priority: 04.05.2005 US 677501 P
(43) Date of publication of application: 16.01.2008
(73) Proprietor: Thomson Licensing, 92130 Issy-les-Moulineaux (FR)
(72) Inventor: VIRAG, David Emery, Noblesville, Indiana 46060 (US); STEWART, John Sydney, Indianapolis, IN 46278 (US); FLICKNER, Andrew Kent, Zionsville, IN 46077 (US); CURTIS, John Joseph, Noblesville, IN 46060 (US)
(74) Representative: Esselin, Sophie
(86) International application number: PCT/US2006/011818
(87) International publication number: WO 2006/118722

(56) References cited:
- EP-A- 1 437 837
- US-A- 5 859 878
- US-A1- 2002 118 784
- US-B1- 6 282 184

## Description

This application claims the benefit under 35 U.S.C.§ 119 of a provisional application 60/677,501 filed in the United States on May 4, 2005.

### FIELD OF THE INVENTION

The invention relates generally toward a communications receiver. The invention more specifically relates to a system and associated method for tuning multiple channels using signal splitting performed after analog to digital conversion.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

In recent years, media delivery to the home has incurred a rapid change. Today, the consumer may be capable of receiving over 100 different programs of material simultaneously in the home from a number of sources, including satellites systems, cable systems, and the internet. It is evident that the consumer can now choose from a greater number of programming options than ever before.

Consumer products are also undergoing a change to cope with the new demands of the consumer, based on the large number of programming options available. New consumer devices will often allow viewing of at least two programs at once, through picture-in-picture, and may further allow recording of more than one program for later viewing. Some devices may even include the ability to redistribute programs throughout an entire household.

The devices that actually receive the signal have, however, undergone very little change throughout this period. Traditional tuners are typically only capable of tuning to a single physical channel frequency of information. If more than one channel of information is desired, then the traditional approach is to split the power of the radio frequency (RF) signal and provide each of the split signals to a separate tuner. When the RF signal is split, a loss of signal energy and overall signal performance is experienced at each separate tuner. In some cases, more than one RF split is necessary which further degrades the signal available to each tuner. This would be necessary if, for example, four tuners are required for an application. In order to overcome the loss of signal energy, the signal(s) could be actively amplified, either before or after the RF split, but amplification may introduce additional noise and distortion into the signal. Therefore, the split signal may have lower signal quality than the signal received prior to the first signal split.

Systems currently using multiple tuner receivers are cellular communication networks, as disclosed eg in US 6282 184 and digital satellite television services. Indeed, it is now more common to find satellite receivers with at least two tuners included. In the future, satellite receivers may have as many as five tuners. Furthermore, changes in system specifications may require that an extra tuner always be available for receiving control information such as the program guide or other downloadable features.

Recent advances in receiver front end technology are beginning to alter the landscape of the satellite receiver design by shifting more and more circuitry into the digital signal processing domain. Many of the conventional analog functions found in the tuner are now migrating into digital circuitry. An advantage of moving the circuitry to the digital domain is that it may be possible to mitigate the potential signal degradation associated with analog devices such as RF splitters.

However, a further complicating factor for receivers capable of receiving multiple channels is that the data for each channel must be individually demodulated to provide the data that can then be used in further processing such as video and audio decoding. A demodulation process typically involves demodulating an encoded signal and performing error-correction to repair or identify any errors incurred during transmission. The demodulation process may also include equalization to aid reception given current channel impairments. Because of physical limitations in the design and implementation of circuits such as silicon integrated circuits, it may not be possible to include more than a small number of demodulation systems on a single silicon die. Again, a traditional approach would be to include a separate tuner system for every demodulation system in the overall design. However, this approach suffers from the performance degradation discussed above. It is therefore desirable to have a system capable of multiple channel reception that minimizes signal performance degradation and takes advantage of scaling afforded by advancing digital circuit designs.

### SUMMARY OF THE INVENTION

The invention is defined in the claims. The disclosed embodiments relate to a system and method for receiving multiple channels in a communications receiver. The system includes a first module that tunes and demodulates a plurality of channels of the multiple channels in an input signal, the first module (206) including an analog to digital converter for converting the input signal to a digital signal, a first interface coupled to said analog to digital converter to provide a first digital signal, said first digital signal being said digital signal in a first digital format, and a first processing circuit including a tuner and a demodulator coupled to said first interface for tuning and demodulating said first digital signal, wherein the first module further includes a second interface connected to said analog to digital converter to provide a second digital signal outside of said first module, said second digital signal being said digital signal in a second digital format; and
- a second module that receives and processes said second digital signal, said second module including a second processing circuit including a tuner and a demodulator to tune and demodulate said second digital signal.

### BRIEF DESCRIPTION OF THE DRAWINGS

In the drawings:
FIG. 1 is a block diagram of a preferred embodiment of the present invention.
FIG. 2 is a block diagram of a preferred embodiment of a system utilizing the present invention.
FIG. 3 is a block diagram of another preferred embodiment of a system utilizing the present invention.
FIG. 4 is a flow chart of an exemplary method of the present invention.

The characteristics and advantages of the present invention may become more apparent from the following description, given by way of example.

### DETAILED DESCRIPTION

One or more specific embodiments of the present invention will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

The following describes a circuit used for receiving satellite signals. Other systems utilized to receive other types of signals where the signal input may be supplied by some other means may include very similar structures. Those of ordinary skill in the art will appreciate that the embodiment of the circuits described herein is merely one potential embodiment. As such, in alternate embodiments, the components of the circuit may be rearranged or omitted, or additional components may be added. For example, with minor modifications, the circuits described may be configured to for use in non-satellite video and audio services such as those delivered from a cable network.

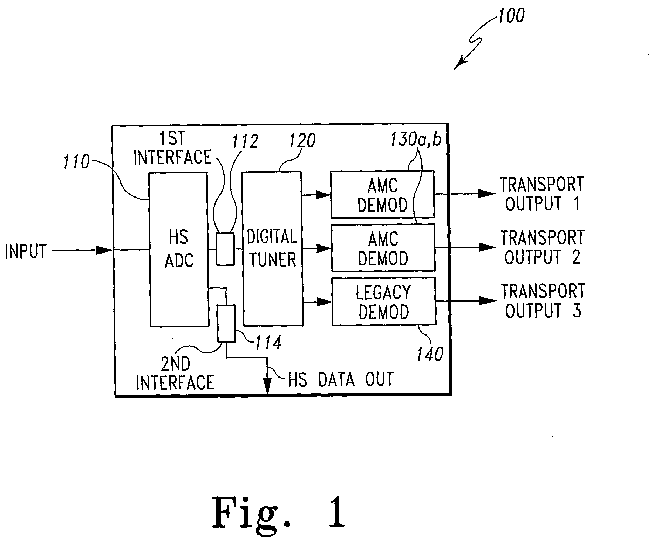

Referring now to Fig. 1, a block diagram of a preferred embodiment of the invention is shown. Fig. 1 shows a tuner demodulator circuit 100 used in a receiver in a satellite signal receiving system. The tuner demodulator circuit 100 may generally be incorporated within a single electrically operative module such as an integrated circuit (IC). An analog RF input signal is supplied to the tuner demodulator circuit 100. The RF input signal represents the transmitted satellite signal downconverted to an intermediate frequency (IF) in the L-band frequency range between one and two gigahertz (GHz). The L-Band signal contains the entire spectrum and associated data corresponding to a particular polarized signal from a particular satellite within the system. For instance, the L-band signal may contain sixteen specific physical channels of information all frequency division multiplexed together and occupying a frequency range between approximately 950 and 1450 MHz. Each channel may be approximately 20 MHz in bandwidth and carry many individual programming streams.

The input signal, representing more than one individual channel, is input to the tuner demodulator circuit 100 and passed to a high speed analog to digital (A/D) converter 110. The input signal may be processed by circuitry, such as amplifiers and filters, not shown, prior to being input into the the tuner demodulator circuit 100. The high speed A/D converter 110 samples the L-band signal to generate a digital output. A sampling clock, not shown, is also input into the high speed AID converter 110. The sampling clock may be a fixed clock source from a crystal or may be generated from another source using a phase locked loop (PLL) oscillator. The sampling clock frequency may be chosen so as to allow proper sampling of the entire L-band signal. In one embodiment, the sampling frequency of 933 Megahertz (MHz) is chosen to sample an L-band signal in the frequency range of 960 MHz to 1440 MHz. The output of the AID converter 110 represents a set of time samples of the L-band signal where each sample may be a digital word represented by a number of bits. In a preferred embodiment, the sample at the output of the AID converter 110 is a digital word represented by 8 bits. Due to the sampling process employed, the frequency spectrum of the sampled digital output of the output of the A/D converter 110 may be frequency shifted and/or transposed relative to its original position in frequency as an analog signal at the input.

The signal from the output of the A/D converter 110 connects to the digital tuner block 120. The signal at the output of the A/D converter is a very high speed digital signal representing, for instance, as much as 8 bits of data at 933 Megasamples per second. Difficulty may arise in providing a signal at such high speed to other functions within the module. The very high speed digital signal may be demultiplexed into two or more signals representing, for instance, two sets of 8 bit signals at 466.5 MHz. The demultiplexing and other timing function may be found within the A/D converter 110. The signal may then be provided over first interface 112. Since the very high speed digital signal is contained within a module, a nonstandard signal format and interface method may be used in connecting the very high speed digital signal to the digital tuner block 120. The first interface 112 may simply provide an electrical connection between the A/D converter 110 and the digital tuner block 120. In one embodiment the very high speed signal is provided on first interface 112 over a controlled impedance interface of a controlled electrical length as a set of signals referenced only to the ground plane.

The digital tuner block 120 provides digital signal processing of the entire spectrum to down-convert and generate one or more specific channels of baseband digital data necessary for further individual channel demodulation and processing. The term baseband as used here is used to represent a signal that is located at baseband or is located in a frequency range that is near to baseband. In one embodiment, three different digital baseband signals are provided as outputs from the digital tuner block 120. In practice, the number of digital baseband signals provided is limited by the number of channels provided in the original L-band signal input, the number of simultaneous channels the digital tuner block 120 can downconvert and generate, and/or the number of demodulators that can follow.

The one or more baseband digital signals are still coded for transmission and therefore must be further demodulated and corrected for transmission errors before the actual programming information becomes available. Demodulation and decoding is carried out in ether the advanced modulation and compression (AMC) demodulators 130a, b or the legacy demodulator 140 depending on the transmission standard the individual channel signal has employed. The type and number of demodulators used is a matter of design choice, and in a preferred emobodiment two AMC demodulators and one legacy demodulator have been included.

The AMC demodulators 130a, b and legacy demodulator 140 contain digital signal processing for the demodulation, transmission equalization, and error correction of the signals according to the required transmission standard. In particular, a legacy demodulator includes processing necessary to demodulate and decode transport streams sent in Motion Picture Entertainment Group standard MPEG 2 format with a Quaternary Phase Shift Keying (QPSK) modulation format. An AMC demodulator includes the processing necessary to demodulate signals sent in MPEG Joint Video Team (JVT) format with 8-PSK modulation and Low Density Parity Check (LDPC) error correction, in addition to the processing included in the legacy demodulator. The AMC demodulator may also include an equalization system to further enhance signal recovery of the more complex format. Further details regarding the individual detailed operation of either of these types of demodulator is beyond the scope of this specification.

The AMC demodulators 130a, b and legacy demodulator 140 provide outputs labeled as transport outputs 1, 2, and 3 respectively. The transport outputs contain individual or multiple program streams of audio, video or data information and may be provided to digital audio/video decoding processes for actual display of the programs and information.

Collectively, the digital tuner block 120, AMC demodulators 130a, b and legacy demodulator 140 make up the processing for the first signal supplied through the first interface 112. Other processing may be included as is known in the art. Other functions and blocks may also be present, but not shown, in the tuner demodulator circuit 100 including a controller for controlling the tuning and signal processing functions. Also, control circuitry may be present in the tuner demodulator for controlling the satellite system's external processing module, often referred to as the outdoor unit. The outdoor unit may include circuitry and processing for switching between different satellites or polarizations. The tuner demodulator circuit 100 may also include control for external circuitry capable of providing some preselection of channels in order to allow the preselected set of channels to be delivered on one cable to the receiver and further to the tuner demodulator as described.

Because of the limitations of physical silicon processes discussed earlier, only a small number of demodulators such as the AMC demodulators 130a, b or legacy demodulator 140 may be present on any single module or integrated circuit. For example, three such circuits may be present. However, it may be necessary or desirable to demodulate, for example, all of the available signal channels simultaneously within one system. In order to accommodate additional demodulators, it may be desirable to split the signal before tuning occurs.

In order to accommodate splitting the signal, a high speed data output and second interface 114 is shown connected to the A/D converter 110. The high speed data output through second interface 114 may represent a digital data signal before digital tuning and demodulation. The high speed data output may be presented externally from the tuner demodulator 100 using some high-speed serial or parallel bus system. For example, in one embodiment the second interface 114 may utilize the low voltage differential signaling (LVDS) protocol on a parallel eight bit bus. Other interface types and formats are possible, as are well known to those skilled in the art. Further, as described for first interface 112, the high speed data output may be multiplexed in order to reduce the operating data speed. The high speed data output signal may be demultiplexed in a manner acceptable for distribution using LVDS in the second interface 114 and may be different than the manner of first interface 112. In one embodiment, the signal is demultiplexed by a factor of four, resulting in four sets of eight bit signals in parallel operating at a bus speed of 233.25 MHz.

Additionally, due to the unknown external nature of the interface, it may be desirable to provide at least one synchronizing signal. The synchronizations signal(s) may be the original high speed clock as well as a demultiplexing clock or other synchronizing signal as is known in the art. All of the demultiplexing and synchronization may further be generated within the A/D converter 110 and supplied through the second interface 114. In this manner, the A/D converter 110 provides two separate signals in two separate formats over two separate interfaces to two separate tuning and demodulating functions. The A/D converter 110 provides a signal containing essentially all of the channels from the original signal through a first interface to the digital tuner 120, and provides substantially this same signal through a second interface in a second format to additional circuits located outside tuner demodulator 100. The interface may serve as an input to a second module or IC containing additional demodulators, such as AMC demodulators or legacy demodulators, as described in more detail below.

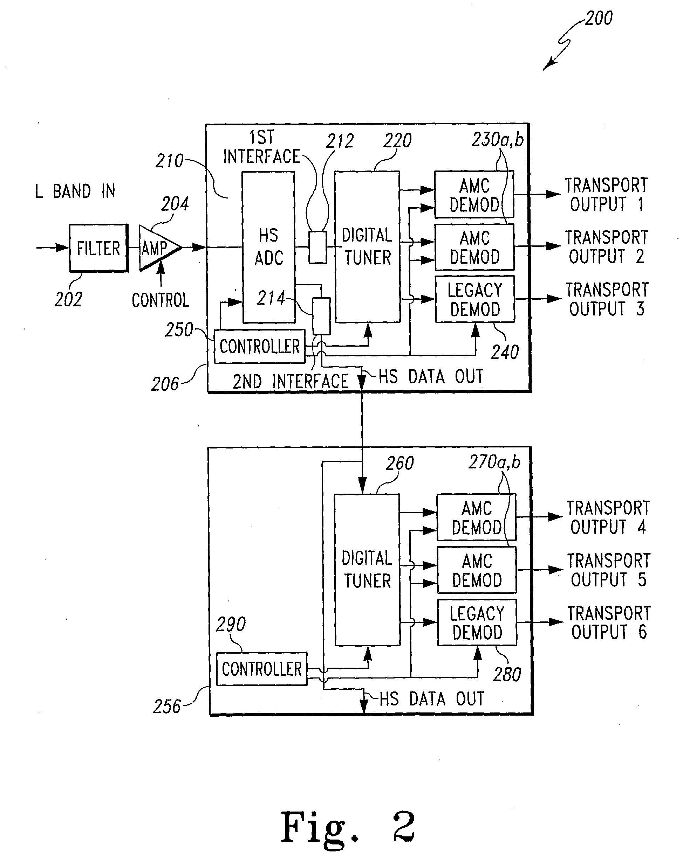

Referring now to Fig. 2, a preferred embodiment of a system, 200, incorporating the invention using two tuner demodulator circuits, such as that shown in Fig. 1 is shown. The L-band analog signal, containing a plurality of satellite channels delivered from an outdoor satellite unit not shown, is processed prior to entering tuner demodulator 206. In a preferred embodiment, the L-band signal is first filtered in L-band filter 202 to remove unnecessary signals present outside the desired L-band frequency range. The output of the L-band filter is connected to a gain controllable amplifier 204. The gain controllable amplifier 204 adjusts the L-band signal level, by means of a control signal, to best optimize the signal for inputting to the A/D converter 210 in tuner demodulator 206. The control signal for the gain controllable amplifier 204 may be generated by circuitry on the tuner demodulator circuit 206. In a preferred embodiment, the control signal may be generated by determining the signal power in the digital data signal from the output of the A/D converter 210. It is important to note that other processing may be possible before the signal enters the tuner demodulator 206.

Tuner demodulator 206 contains an A/D converter 210, first and second interfaces 212 and 214, digital tuner 220, demodulators 230a, b and 240 as described above. The tuner demodulator 206 provides transport outputs 1, 2, and 3 for further information processing as described above. A controller 250 provides control for the operation of the digital tuner 220 and the demodulators 230a, b and 240. The controller 250 connects to all of the existing blocks in the tuner demodulator 206. The controller 250 operatively receives inputs from external circuitry, not shown, representing, for instance, requests from a user for channels to be received and tuned. The controller 250 processes these inputs to generate the control information and provides this control information to the digital tuner 220 for selecting and tuning the particular channel from the group of channels present. The controller 250 may also generate the control information used by the demodulators 230 a, b and 240 for selecting particular channel demodulation characteristics, such as the type of modulation or error correction that may be used with the particular channel.

The tuner demodulator 206 also contains a high speed data output through second interface 214 providing an output signal representative of the digital signal at the output of the A/D converter. The high speed data output connects to tuner demodulator 256. Tuner demodulator 256 does not contain an A/D converter and utilizes the signal supplied by the high speed data output as the input signal to the digital tuner 260 within the tuner demodulator 256. Collectively, the digital tuner block 260, AMC demodulators 270a, b and legacy demodulator 280 make up the processing for the second signal supplied through the second interface 214. Additional processing may also be included as is known in the art. The tuner demodulator 256 may choose the particular information about the signal necessary to demodulate one or more channels, which would likely be different than the channels tuned in tuner demodulator 206.

The tuner demodulator 256 provides transport outputs 4, 5, and 6 for further information processing as described above. A controller 290 connects to all of the existing blocks in the tuner demodulator 256. The controller 290 may operatively receive inputs from external circuitry, not shown, representing, for instance, requests from a user for channels to be received and tuned. The controller 290 processes these inputs to generate the control information and provides this information to the digital tuner 260 for selecting and tuning the particular channel from the group of channels present. The controller 290 may also generate the control information used by the demodulators 270a, b and 280 for selecting particular channel demodulation characteristics, such as the type of modulation or error correction that may be used with the particular channel.

The tuner demodulator 256 may also contain a high speed data output similar to tuner demodulator 206. It may also contain an interface, not shown, similar to second interface 214. The high-speed data output stream may be again routed externally and provided to another tuner demodulator. The signal splitting and distribution operation may continue until as many channels of information as necessary may be processed and demodulated.

In one embodiment, the analog-digital converter 210 may reside on a separate integrated circuit die packaged within a multi-chip module integrated circuit. The integrated circuit die containing the digital tuner and demodulators used in both tuner demodulator 206 and tuner demodulator 256 may be identical. The high-speed A/D converter may be present in only one integrated circuit and not be present on subsequent integrated circuits used in the system. As a result, a single circuit for the tuner and demodulator may be designed and the system design may be scaled externally corresponding to the number of channels desired for simultaneous demodulation, and require that only one A/D converter be used in a particular system. The ability to depopulate or eliminate the A/D converter circuits would save cost on the overall implementation, provide an effective method for signal splitting, and yet still provide the convenience of a single circuit design.

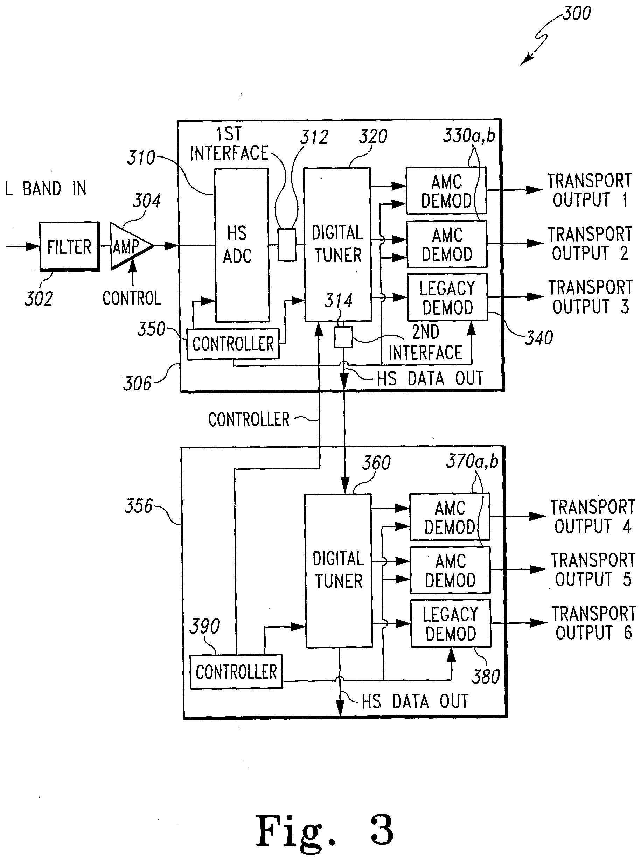

Turning now to Fig. 3, a preferred embodiment of a system, 300, incorporating the invention using two tuner demodulator circuits is shown. The L-band analog signal is processed through L-band filter 302 and gain controllable amplifier 304 as described above. It is important to note that other processing may be possible before the signal enters the tuner demodulator 306.

Tuner demodulator 306 contains an A/D converter 310, first and second interfaces 312 and 314, digital tuner 320, demodulators 330a, b and 340, and controller 350 as described above. The tuner demodulator 306 provides transport outputs 1, 2, and 3 for further information processing as described above. The tuner demodulator 306 also contains a high speed data output for providing an output signal to the input of tuner demodulator 356.

Tuner demodulator 356 does not contain an A/D converter and utilizes the signal supplied by the high speed data output as the input signal to the digital tuner 370 inside of the tuner demodulator 356. The high speed data output is connected internally to the digital tuner block 320. In this manner, the split signal from A/D converter 310 may be modified by utilizing a portion of the processing in the digital tuner block 320 before splitting and transferring the signal to tuner demodulator 356. The tuner demodulator 356 may choose the particular information about the signal necessary to demodulate one or more channels, which would likely be different than the channels tuned in tuner demodulator 306. The controller 390 within tuner demodulator 356 provides a control signal for controlling what information is provided from tuner demodulator 306 to tuner demodulator 356. For instance, a control signal, supplied by a separate connection as shown, may be supplied from tuner demodulator 356 to tuner demodulator 306 for controlling the specific processing needed in the digital tuner block 320. The controller 390 also connects, and provides control, to all of the existing blocks in the tuner demodulator 356, as described above.

The processed signal output from digital tuner 320 may be routed through second interface 314 as the high speed data output and provided as an input in tuner demodulator 356. An advantage of using such an approach would be to allow the high speed data output to operate at a lower operating speed because only a specified portion of the original signal would be transferred to tuner demodulator 356, rather than the entire signal containing all channels. In one embodiment, the digital tuner 320 may generate more than one signal for delivery to tuner demodulator 356 based on the control signal. Each of these signals may represent one or more individual channels as required for the operation of tuner demodulator 356. Each signal transferred between tuner demodulator 306 and tuner demodulator 356 may then utilize separate physical connections. The tuner demodulator 356 also provides transport outputs 4,5, and 6 for further information processing as described above. In this embodiment, it may be possible that either controller 350 or controller 390 may serve as a master controller for receiving inputs from external sources, such as user inputs for controlling the channels to tune.

In another embodiment, the tuner demodulator 356 may also contain a high speed data output similar to tuner demodulator 306. The high-speed data output stream may be again routed externally and provided to another tuner demodulator. The signal splitting and distribution operation may continue until as many channels of information as necessary may be processed and demodulated.

In another embodiment, the high speed data output may be modified by allowing more than one signal processed by the digital tuner block 320 to be multiplexed onto the same interface connection. Multiplexing the signals to be transferred may result in reducing the number of separate connections between tuner demodulator 306 and tuner demodulator 356 by combining all of the signals processed by digital tuner block 320 and provided to tuner demodulator 356 onto one bus connection.

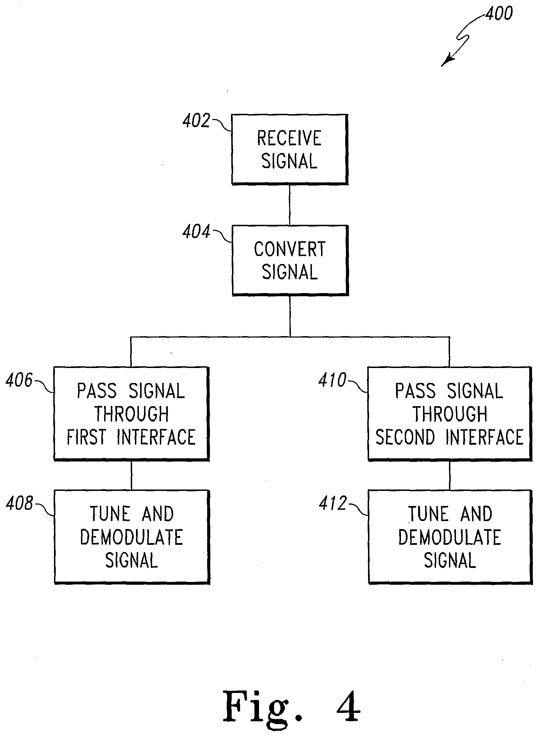

Turning now to Fig. 4, an exemplary method, 400, utilizing the present invention is shown. At step 402, an analog input signal is received. The analog input signal may represent, for instance, a plurality of channels located at different frequencies delivered from a satellite system.

Next, at step 404 the analog input signal is converted from its analog form to a digital form in a circuit such as AID converter 210, as described in Fig. 2. The converted signal is now a digital signal representing a plurality of or channels.

Next, at step 406, the digital signal is passed through a first interface 212. This first interface may primarily be an interface that is internal to a module. After passing through the first interface, at step 408, the signal is tuned in digital tuner 220, and the selected tuned channels are then demodulated in demodulators 230a, b and 240 respectively to produce one or more transport outputs.

In parallel to steps 406, at step 410, the digital signal passes through a second interface 214. The second interface may utilize the high speed output that may additionally provide a signal external to a module where the A/D converter 210 is located. Finally at step 412, the converted signal, having passed through the second interface 212, tuned in digital tuner 260, and the selected tuned channels are then demodulated in demodulators 270a, b and 280 respectively to produce one or more transport outputs.

As described earlier in Fig. 3, the signal that is provided through the first interface 312 and the signal that is provided through the second interface 314 may or may not be substantially the same. For instance, the signal provided through the second interface 314 may include some additional processing performed within the digital tuner 320 connected to the first interface 312.

While the invention may be susceptible to various modifications and alternative forms, specific embodiments have been shown by way of example in the drawings and will be described in detail herein. However, it should be understood that the invention is not intended to be limited to the particular forms disclosed. Rather, the invention is to cover all modifications, equivalents and alternatives falling within the spirit and scope of the invention as defined by the following appended claims.

## Claims

1. A system (200) for processing multiple channels for a communications receiver comprising:
- a first module (206) adapted to tune and demodulate a plurality of channels of the multiple channels in an input signal, the first module (206) including an analog to digital converter (210) for converting the input signal to a digital signal, a first interface (212) coupled to said analog to digital converter (210) to provide a first digital signal, said first digital signal being said digital signal in a first digital format, and a first processing circuit including a tuner and a demodulator (220, 230, 240) coupled to said first interface for tuning and demodulating said first digital signal, wherein the first module further includes a second interface (214) connected to said analog to digital converter (210) to provide a second digital signal outside of said first module, said second digital signal being said digital signal in a second digital format; and
- a second module (256) adapted to receive and process said second digital signal, said second module (256) including a second processing circuit including a tuner and a demodulator (260, 270, 280) adapted to tune and demodulate said second digital signal.

2. The system (200) according to claim 1, wherein the tuner (220) in said first processing circuit is a digital tuner capable of tuning and outputting a plurality of channels simultaneously.

3. The system (200) according to claim 1, wherein said demodulator (230, 240) in said first processing circuit (220, 230, 240) is capable of demodulating a Quaternary Phase Shift Keying (QPSK) signal or an 8-PSK signal.

4. The system (200) according to claim 1, wherein said second digital signal represents a plurality of channels.

5. The system (200) according to claim 1, wherein said first module (206) is adapted to output a plurality of first transport signals and said second module (256) is adapted to output a plurality of second transport signals.

6. The system (200) according to claim 1, wherein said input signal contains a plurality of analog channels.

7. The system (200) according to claim 6, wherein said analog to digital converter (210) is adapted to process said plurality of analog channels simultaneously.

8. The system (200) according to claim 6, wherein said plurality of analog channels are frequency division multiplexed.

9. The system (200) according to claim 1 wherein said second module (256) further includes a controller (290) operatively coupled between said second module (256) and said first module (206) for controlling said second digital signal.

10. A method (400) for processing multiple channels for a communications receiver, comprising the steps of:
receiving an analog signal (402) containing multiple channels;
converting said analog signal to a digital signal (404);
passing said digital signal through a first interface (406) to produce a first digital signal in a first digital format;
processing said first digital signal in the first digital format passed through said first interface to tune and demodulate a first plurality of channels (408);
passing said digital signal through a second interface to produce a second digital signal in a second digital format (410); and
processing said second digital signal in the second digital format passed through said second interface to tune and demodulate a second plurality of channels (412);
wherein said first interface and said second interface are not the same.

11. The method (400) according to claim 10, wherein the step of processing said second digital signal passing through said second interface (412) further comprises the steps of demodulating said second digital signal to produce a plurality of transport streams.

12. The method (400) according to claim 10, wherein said first interface is an interface for passing said first digital signal in said first digital format internal to a module.

13. The method (400) according to claim 10, wherein said second interface is an interface for passing said second signal in said second digital format to the outside of a module.

## Patentansprüche

1. System (200) zum Verarbeiten mehrerer Kanäle für einen Kommunikationsempfänger, wobei das System umfasst:
- ein erstes Modul (206), das dafür ausgelegt ist, eine Mehrzahl von Kanälen der mehreren Kanäle in einem Eingangssignal abzustimmen und zu demodulieren, wobei das erste Modul (206) einen Analog-Digital-Umsetzer (210) zum Umsetzen des Eingangssignals in ein digitales Signal, eine erste Schnittstelle (212), die mit dem Analog-Digital-Umsetzer (210) gekoppelt ist, um ein erstes digitales Signal bereitzustellen, wobei das erste digitale Signal das digitale Signal in einem ersten digitalen Format ist, und eine erste Verarbeitungsschaltung, die einen Tuner und einen Demodulator (220, 230, 240), die mit der ersten Schnittstelle gekoppelt sind, um das erste digitale Signal abzustimmen und zu demodulieren enthält, enthält, wobei das erste Modul ferner eine zweite Schnittstelle (214), die mit dem Analog-Digital-Umsetzer (210) verbunden ist, um ein zweites digitales Signal außerhalb des ersten Moduls bereitzustellen, wobei das zweite digitale Signal das digitale Signal in einem zweiten digitalen Format ist, enthält; und
- ein zweites Modul (256), das dafür ausgelegt ist, das zweite digitale Signal zu empfangen und zu verarbeiten, wobei das zweite Modul (256) eine zweite Verarbeitungsschaltung enthält, die einen Tuner und einen Demodulator (260, 270, 280), die dafür ausgelegt sind, das zweite digitale Signal abzustimmen und zu demodulieren, enthält.

2. System (200) nach Anspruch 1, wobei der Tuner (220) in der ersten Verarbeitungsschaltung ein digitaler Tuner ist, der eine Mehrzahl von Kanälen gleichzeitig abstimmen und ausgeben kann.

3. System (200) nach Anspruch 1, wobei der Demodulator (230, 240) in der ersten Verarbeitungsschaltung (220, 230, 240) ein quaternäres Phasenumtastungssignal (QPSK-Signal) oder ein 8-PSK-Signal demodulieren kann.

4. System (200) nach Anspruch 1, wobei das zweite digitale Signal eine Mehrzahl von Kanälen repräsentiert.

5. System (200) nach Anspruch 1, wobei das erste Modul (206) dafür ausgelegt ist, eine Mehrzahl erster Transportsignale auszugeben, und wobei das zweite Modul (256) dafür ausgelegt ist, eine Mehrzahl zweiter Transportsignale auszugeben.

6. System (200) nach Anspruch 1, wobei das Eingangssignal eine Mehrzahl analoger Kanäle enthält.

7. System (200) nach Anspruch 6, wobei der Analog-Digital-Umsetzer (210) dafür ausgelegt ist, die Mehrzahl analoger Kanäle gleichzeitig zu verarbeiten.

8. System (200) nach Anspruch 6, wobei die Mehrzahl analoger Kanäle frequenzmultiplexiert sind.

9. System (200) nach Anspruch 1, wobei das zweite Modul (256) ferner einen Controller (290) enthält, der funktional zwischen das zweite Modul (256) und das erste Modul (206) gekoppelt ist, um das zweite digitale Signal zu steuern.

10. Verfahren (400) zum Verarbeiten mehrerer Kanäle für einen Kommunikationsempfänger, wobei das Verfahren die folgenden Schritte umfasst:
Empfangen eines analogen Signals (402), das mehrere Kanäle enthält;
Umsetzen des analogen Signals in ein digitales Signal (404) ;
Leiten des digitalen Signals über eine erste Schnittstelle, um ein erstes digitales Signal in einem ersten digitalen Format zu erzeugen (406);
Verarbeiten des ersten digitalen Signals in dem ersten digitalen Format, das über die erste Schnittstelle geleitet wird, um eine erste Mehrzahl von Kanälen abzustimmen und zu demodulieren (408);
Leiten des digitalen Signals über eine zweite Schnittstelle, um ein zweites digitales Signal in einem zweiten digitalen Format zu erzeugen (410); und
Verarbeiten des zweiten digitalen Signals in dem zweiten digitalen Format, das über die zweite Schnittstelle geleitet wird, um eine zweite Mehrzahl von Kanälen abzustimmen und zu demodulieren (412);
wobei die erste Schnittstelle und die zweite Schnittstelle nicht dieselben sind.

11. Verfahren (400) nach Anspruch 10, wobei der Schritt des Verarbeitens des zweiten digitalen Signals, das über die zweite Schnittstelle (412) geleitet wird, ferner den Schritt des Demodulierens des zweiten digitalen Signals, um eine Mehrzahl von Transportströmen zu erzeugen, umfasst.

12. Verfahren (400) nach Anspruch 10, wobei die erste Schnittstelle eine Schnittstelle ist, um das erste digitale Signal in dem ersten digitalen Format intern zu einem Modul zu leiten.

13. Verfahren (400) nach Anspruch 10, wobei die zweite Schnittstelle eine Schnittstelle ist, um das zweite digitale Signal in dem zweiten digitalen Format nach außerhalb eines Moduls zu leiten.

## Revendications

1. Système (200) pour traiter plusieurs canaux pour un récepteur de communications comprenant :
- un premier module (206) adapté pour syntoniser et démoduler une pluralité de canaux des canaux multiples dans un signal d'entrée, le premier module (206) incluant un convertisseur analogique-numérique (210) pour convertir le signal d'entrée en signal numérique, une première interface (212) couplée audit convertisseur analogique-numérique (210) pour fournir un premier signal numérique, ledit premier signal numérique étant ledit signal numérique dans un premier format numérique, et un premier circuit de traitement incluant un syntoniseur et un démodulateur (220, 230, 240) couplé à ladite première interface pour syntoniser et démoduler ledit premier signal numérique, où le premier module inclut en outre une seconde interface (214) connectée audit convertisseur analogique-numérique (210) pour fournir un second signal numérique en dehors dudit premier module, le dit second signal numérique étant ledit signal numérique dans un second format numérique ; et
- un second module (256) adapté pour recevoir et traiter ledit second signal numérique, ledit second module (256) incluant un second circuit de traitement incluant un syntoniseur et un démodulateur (260, 270, 280) adapté pour syntoniser et démoduler ledit second signal numérique.

2. Système (200) selon la revendication 1, dans lequel le syntoniseur (220) dudit premier circuit de traitement est un syntoniseur numérique capable de syntoniser et de générer une pluralité de canaux simultanément.

3. Système (200) selon la revendication 1, dans lequel ledit démodulateur (230, 240) dudit premier circuit de traitement (220, 230, 240) est capable de démoduler un signal de modulation par déplacement de phase quadrivalente (QPSK) ou un signal 8-PSK.

4. Système (200) selon la revendication 1, dans lequel ledit second signal numérique représente une pluralité de canaux.

5. Système (200) selon la revendication 1, dans lequel ledit premier module (206) est adapté pour générer
une pluralité de premiers signaux de transport et ledit second module (256) est adapté pour générer une pluralité de seconds signaux de transport.

6. Système (200) selon la revendication 1, dans lequel ledit signal d'entrée contient une pluralité de canaux analogiques.

7. Système (200) selon la revendication 6, dans lequel ledit convertisseur analogique-numérique (210) est adapté pour traiter ladite pluralité de canaux analogiques simultanément.

8. Système (200) selon la revendication 6, dans lequel ladite pluralité de canaux analogiques est multiplexée par division de fréquence.

9. Système (200) selon la revendication 1, dans lequel ledit second module (256) inclut en outre un contrôleur (290) couplé de manière fonctionnelle entre ledit second module (256) et ledit premier module (206) pour contrôler ledit second signal numérique.

10. Procédé (400) pour traiter plusieurs canaux pour un récepteur de communications comprenant les étapes suivantes :
réception d'un signal analogique (402) contenant plusieurs canaux ;
conversion dudit signal analogique en signal numérique (404) ;
transmission dudit signal numérique par une première interface (406) pour produire un premier signal numérique dans un premier format numérique ;
traitement dudit premier signal numérique dans le premier format numérique transmis par ladite première interface pour syntoniser et démoduler une première pluralité de canaux (408) ;
transmission dudit signal numérique par une seconde interface pour produire un second signal numérique dans un second format numérique (410) ; et
traitement dudit second signal numérique dans le second format numérique transmis par ladite seconde interface pour syntoniser et démoduler une seconde pluralité de canaux (412) ;
dans lequel ladite première interface et ladite seconde interface ne sont pas les mêmes.

11. Procédé (400) selon la revendication 10, dans lequel l'étape de traitement dudit second signal numérique transmis par ladite seconde interface (412) comprend en outre les étapes de démodulation dudit second signal numérique pour produire une pluralité de flux de transport.

12. Procédé (400) selon la revendication 10, dans lequel ladite première interface est une interface pour transmettre ledit premier signal numérique dans ledit premier format numérique à l'intérieur d'un module.

13. Procédé (400) selon la revendication 10, dans lequel ladite seconde interface est une interface pour transmettre ledit second signal numérique dans ledit second format numérique à l'extérieur d'un module.
